# EUROPÄISCHE PATENTSCHRIFT

(11) **EP 2 106 518 B1**
(45) Veröffentlichungstag und Bekanntmachung des Hinweises auf die Patenterteilung: **02.11.2011**
(21) Anmeldenummer: 08761375.8
(22) Anmeldetag: 25.06.2008
(51) Int. Cl.: F27B 7/20

(54) **VORRICHTUNG ZUR SEPARIERUNG VON EINEM FESTSTOFF UND EINEM GAS SOWIE ANLAGE ZUR ZEMENTHERSTELLUNG**
DEVICE FOR SEPARATING A SOLID MATERIAL AND A GAS AND PLANT FOR PRODUCING CEMENT
DISPOSITIF POUR SÉPARER UN SOLIDE ET UN GAZ ET INSTALLATION DE FABRICATION DE CIMENT

(30) Priorität: 07.08.2007 DE 102007037281
(43) Veröffentlichungstag der Anmeldung: 07.10.2009
(73) Patentinhaber: ThyssenKrupp Polysius AG, 59269 Beckum (DE)
(72) Erfinder: GEORG, Verena, 59071 Hamm (DE); KUPPER, Detlev, 48291 Telgte (DE); LAGAR GARCIA, Luis, 48149 Münster (DE); HOPPE, Andreas, 59555 Lippstadt (DE); THIEMEYER, Heinz-Werner, 59320 Ennigerloh (DE); KLEGRAF, Daniel, 59602 Rüthen-Westereiden (DE); DECK, Thomas, 59320 Ennigerloh (DE); RICHTER, Stefanie, 32756 Detmold (DE)
(74) Vertreter: Tetzner, Michael
(86) Internationale Anmeldenummer: PCT/EP2008/058105
(87) Internationale Veröffentlichungsnummer: WO 2009/019072

(56) Entgegenhaltungen:
- DE-A1- 3 612 031
- US-A- 4 318 692
- US-B1- 6 213 764

## Beschreibung

Die Erfindung betrifft eine Vorrichtung zur Separierung von einem Feststoff und einem Gas sowie eine Anlage zur Zementherstellung.

In der Zement- und Mineralsindustrie sind zur Vorwärmung, Kühlung und/oder Calcinierung von feinkörnigen Materialien insbesondere Systeme bestehend aus Gleichstromwärmetauscher und Zyklonabscheider bekannt. Meist weisen derartige Vorrichtungen mehrere übereinander angeordnete Stufen auf, wobei der Gasstrom von unten nach oben durch alle Stufen geleitet wird, während der Feststoff in entgegengesetzter Richtung den einzelnen Stufen zugeführt wird. Am Ende jeder Stufe wird der Feststoff vom Gas getrennt. Derartige Anlagen sind beispielsweise aus der DE 36 12 031 A1 und der US 6,213,764 B1 bekannt.

Derartige Systeme haben den Nachteil, dass sie eine enorme Bauhöhe benötigen und der Abscheidegrad im Zyklonabscheider nicht immer befriedigend ist. So kommt es in den Zyklonen oftmals zu unkontrollierten Strömungen, die beispielsweise am Zykloneintritt durch Überlagerung des Eintrittsgasstromes mit dem im Zyklon ausgebildeten Wirbelstrom oder durch Umkehr der Gasströmungsrichtung im Konus des Zyklons bedingt sind. Weiterhin kann es zum Wiedereinstreuen der schon am Zyklonrand abgeschiedenen Partikel in den Gaseintrittsstrom des Zyklons kommen.

Eine weitere Problematik besteht darin, dass sich bei unterschiedlich großen Bauformen die Zentrifugalkräfte bei gleichen Eintrittsgeschwindigkeiten verändern und sich dadurch andere Abscheideverhältnisse ergeben.

In der US 4,318,692 wurde daher ein mehrstufiger Vorwärmer für Zementrohmaterial vorgeschlagen, dessen einzelne Stufen jeweils aus einer Steigleitung und einer sich anschließenden wendel- und/oder spiralartigen Leitung bestehen. Die Steigleitung und die wendel- und/oder spiralartigen Leitungen sind über einen Umlenkbogen miteinander verbunden. Die wendel- und/oder spiralartige Leitung weist zudem einen rechteckigen Querschnitt auf und ist an einer Seitenfläche einer quaderförmigen Abscheidekammer angeschlossen. Die Anschlussstelle erstreckt sich dabei über die gesamte Seitenfläche der quaderförmigen Abscheidekammer. Der untere Teil der Abscheidekammer verjüngt sich trichterförmig und dient zum Abführen des Feststoffs, während das Gas nach oben abgeleitet wird. Der Abscheidegrad ist jedoch ungenügend.

Der Erfindung liegt daher die Aufgabe zugrunde, den Abscheidegrad der Vorrichtung zur Separierung von einem Feststoff und einem Gas zu verbessern.

Erfindungsgemäß wird diese Aufgabe durch die Merkmale des Anspruches 1 gelöst.

Die erfindungsgemäße Vorrichtung zur Separierung von einem Feststoff und einem Gas besteht im Wesentlichen aus
a. einer Steigleitung zum Leiten einer Gas-Feststoff-Suspension mit einer Feststoffzuführöffnung zum Zuführen eines Feststoffs und einer Gaszuführöffnung zum Zuführen eines Gases,
b. einer absteigenden wendel- und/oder spiralartigen Leitung, in der durch Zentrifugalkräfte die Gas-Feststoff-Suspension in einen Feststoffstrom und einen Gasstrom getrennt wird,
c. einem Umlenkkopf, der die Steigleitung mit der wendel- und/oder spiralartigen Leitung verbindet, wobei der Umlenkkopf im Anschlussbereich an die Steigleitung eine erste Querschnittsform und im Anschlussbereich an die wendel- und/oder spiralartigen Leitung eine unterschiedliche zweite Querschnittsform aufweist und im Bereich des Umlenkkopfs wenigstens ein Knick in der Leitungsführung vorgesehen ist,
d. einer mit dem Ende der wendet- und/oder spiralartigen Leitung in Verbindung stehenden Gasleitung zum Ableiten des Gasstroms.

Unter einer wendel- und/oder spiralartigen Leitung im Sinne der Erfindung wird eine Leitung verstanden, die zumindest abschnittsweise wendel- und/oder spiralförmig ausgebildet ist. Die Drehung der wendel- und/oder spiralartigen Leitung kann sich dabei insbesondere auch nur über einen kleineren Winkclbcrcich, von beispielsweise 90°, erstrecken.

Bei der US 4,318,692 sind die Steigleitung und die absteigende wendel- und/oder spiralartige Leitung über einen Umlenkbogen miteinander verbunden.

Um den Abscheidegrad der Vorrichtung zu verbessern, hat man bei den der Erfindung zugrundeliegenden Versuchen versucht, die Vorseparierung des Feststoffstroms und des Gasstroms bereits in der wendel- und/oder spiralartigen Leitung zu verbessern. Dabei hat sich gezeigt, dass es für diesen Zweck vorteilhaft ist, wenn im Bereich des Umlenkkopfes Turbulenzen in der Gas-Feststoff-Suspension erzeugt werden. Während bei der US 4,318,192 die Gas-Feststoff-Suspension harmonisch umgelenkt wird, werden erfindungsgemäß durch den Knick in der Leitungsführung gezielt Turbulenzen erzeugt, die in der sich anschließenden wendel- und/oder spiralartigen Leitung zu einer besseren Vorseparierung von Feststoffstrom und Gasstrom führen.

Weitere Vorteile und Ausgestaltungen der Erfindung sind Gegenstand der Unteransprüche.

Gemäß einer bevorzugten Ausgestaltung der Erfindung weist der Knick in der Leitungsführung in einer Seitenansicht einen Winkel ≤ 120° auf. Weiterhin kann auch ein Knick in der Leitungsführung vorgesehen werden, der in der Draufsicht einen Winkel ≤ 170° aufweist. Der Knick ist vorzugsweise so ausgebildet, dass die Gas-Feststoff-Suspension in einem spitzen oder stumpfen Winkel umgelenkt wird. Dadurch, dass der Umlenkkopf im Anschlussbereich an die Steigleitung eine erste Querschnittsform und im Anschlussbereich an die wendel- und/oder spiralartige Leitung eine zweite Querschnittsform aufweist, kann die Steigleitung beispielsweise rund und die wendel- und/oder spiralartige Leitung eckig ausgebildet werden.

In einer besonderen Ausgestaltung der Erfindung weist der Umlenkkopf einen ersten, an die Steigleitung angeschlossenen Teil und einen zweiten, mit der wendel- und/oder spiralartigen Leitung in Verbindung stehenden Teil auf, wobei der zweite Teil des Umlenkkopfes derart an den ersten Teil des Umlenkkopfes angebunden ist, dass sich zwischen den beiden Teilen der Knick in der Leitungsführung ergibt.

Der erste Teil des Umlenkkopfes kann beispielsweise durch einen rohrförmigen Abschnitt mit kreisförmigen Querschnitt gebildet werden, der an seinem der Steigleitung abgewandten Ende in den zweiten Teil des Umlenkkopfes übergeht, wobei der zweite Teil ein Übergangsstück vom kreisförmigen Querschnitt des ersten Teils auf den Querschnitt der wendel- und/oder spiralartigen Leitung bildet, und wobei die beiden Teile derart miteinander verbunden sind, dass die Gas-Feststoff-Suspension in einem spitzen und/oder stumpfen Winkel umgelenkt wird.

Dabei ist es denkbar, dass der erste Teil des Umlenkkopfs eine zylindrische Umfangswand aufweist und der zweite Teil des Umlenkkopfs im Bereich der zylindrischen Umfangswand angeschlossen ist. Weiterhin kann der erste Teil des Umlenkkopfes in Strömungsrichtung durch eine quer oder schräg zur Strömungsrichtung verlaufende Stirnwand abgeschlossen sein.

Gemäß einem weiteren Ausführungsbeispiel ist die wendel- und/oder spiralartige Leitung derart an den Umlenkkopf angeschlossen, dass der wenigstens eine oder ein weiterer Knick an der Anschlussstelle zwischen Umlenkkopf und wendel- und/oder spiralartiger Leitung vorgesehen ist.

Weiterhin kann eine mit dem Ende der wendel- und/oder spiralartigen Leitung in Verbindung stehende Abscheidekammer vorgesehen werden, an welche die Feststoffleitung zum Ableiten des Feststoffstroms und die Gasleitung zum Ableiten des Gasstroms angeschlossen sind.

Die oben beschriebene Vorrichtung zur Separierung von einem Feststoff und einem Gas eignet sich auch dafür, in mehreren Stufen übereinander angeordnet zu werden. Dabei geht die Gasleitung einer Stufe in die Steigleitung der nächst höheren Stufe über und die Feststoffleitung einer Stufe mündet in die Steigleitung der nächst niedrigeren Stufe. Auf diese Weise kann der Feststoff von oben nach unten durch die einzelnen Stufen geleitet und mit dem in umgekehrter Richtung geführten Gasstrom in Kontakt gebracht werden. Die Vorrichtung zur Separierung von einem Feststoff und einem Gas lässt sich insbesondere für einen Vorwärmer und/oder einen Calcinator einer Anlage zur Zementherstellung mit Vorwärmer, Calcinator und Ofen einsetzen.

Weitere Vorteile und Ausgestaltungen der Erfindung werden im Folgenden anhand der Beschreibung einiger Ausführungsbeispiele und der Zeichnung näher erläutert.

In der Zeichnung zeigen
- Fig. 1a bis 1c: verschiedene Ansichten einer Vorrichtung zur Separierung von einem Feststoff und einem Gas gemäß einem ersten Ausführungsbeispiel,
- Fig. 2a bis 2c: verschiedene Ansichten einer Vorrichtung zur Separierung von einem Feststoff und einem Gas gemäß einem zweiten Ausführungsbeispiel,
- Fig. 3a bis 3c: verschiedene Ansichten einer Vorrichtung zur Separierung von einem Feststoff und einem Gas gemäß einem dritten Ausführungsbeispiel,
- Fig. 4a bis 4c: verschiedene Ansichten einer Vorrichtung zur Separierung von einem Feststoff und einem Gas gemäß einem vierten Ausführungsbeispiel,
- Fig. 5a bis 5c: verschiedene Ansichten einer Vorrichtung zur Separierung von einem Feststoff und einem Gas gemäß einem fünften Ausführungsbeispiel,
- Fig. 6a bis 6c: verschiedene Ansichten einer Vorrichtung zur Separierung von einem Feststoff und einem Gas gemäß einem sechsten Ausführungsbeispiel,
- Fig. 7a bis 7d: verschiedene Ansichten einer Vorrichtung zur Separierung von einem Feststoff und einem Gas gemäß einem siebten Ausführungsbeispiel,
- Fig. 8: eine Seitenansicht eines Vorwärmers und
- Fig.9: eine dreidimensionale Darstellung einer Anlage zur Zementherstellung.

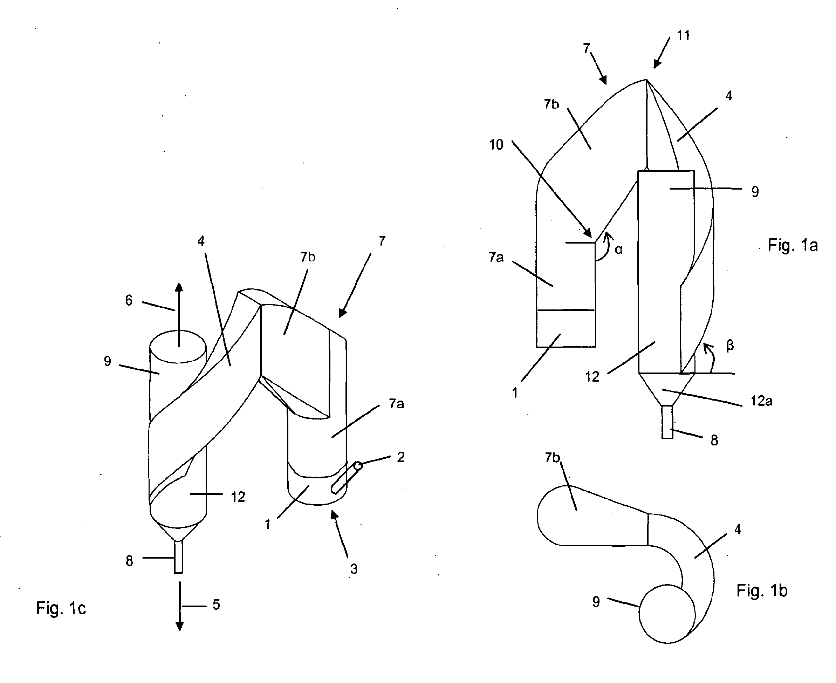

Bei der in den Figuren 1a bis 1c dargestellten Vorrichtung zur Separierung von einem Feststoff und einem Gas handelt es sich beispielsweise um eine Vorrichtung zur Vorwärnung, Kühlung und/oder Calcinierung von feinkörnigem Materialien bei der Zementherstellung. Sie besteht im Wesentlichen aus einer Steigleitung 1 zum Leiten einer Gas-Feststoff-Suspension mit einer Feststoffzuführöffnung 2 zum Zuführen eines Feststoffs und einer Gaszuführöffnung 3 zum Zuführen eines Gases, sowie einer absteigenden wendel- und/oder spiralartigen Leitung 4, in der durch Zentrifugalkräfte die Gas-Feststoff-Suspension in einen Feststoffstrom 5 und einen Gasstrom 6 getrennt wird. Weiterhin ist ein Umlenkkopf 7 vorgesehen, der die Steigleitung 1 mit der wendel- und/oder spiralartigen Leitung 4 verbindet. Das Ende der wendel- und/oder spiralartigen Leitung 4 steht mit einer Feststoffleitung 8 zum Ableiten des Feststoffstroms 5 sowie einer Gasleitung 9 zum Ableiten des Gasstroms 6 in Verbindung.

Der Umlenkkopf 7 weist einen ersten, an die Steigleitung 1 angeschlossenen Teil 7a und einen zweiten, mit der wendel- und/oder spiralartigen Leitung 4 in Verbindung stehenden Teil 7b auf, wobei der zweite Teil 7b des Umlenkkopfs 7 derart an den ersten Teil 7a angebunden ist, dass sich zwischen den beiden Teilen ein erster Knick 10 in der Leitungsführung ergibt. Der Knick 10 in der Leitungsführung weist in der Seitenansicht gemäß Fig. 1a einen Winkel α ≤ 160° auf.

Der erste Teil 7a des Umlenkkopfs 7 wird durch einen rohrförmigen Abschnitt mit kreisförmigen Querschnitt gebildet, der im dargestellten Ausführungsbeispiel dem Durchmesser der Steigleitung 1 entspricht. Der seitlich an den rohrförmigen Abschnitt des ersten Teils 7a angeschlossene zweite Teil 7b stellt ein Übergangsstück vom kreisförmigen Querschnitt des ersten Teils auf den Querschnitt der wendel- und/oder spiralartigen Leitung 4 dar. Im dargestellten Ausführungsbeispiel sind beide Teile 7a, 7b derart miteinander verbunden, dass die Gas-Feststoff-Suspension in einem stumpfen Winkel umgelenkt wird.

Neben dem ersten Knick 10 ist im Bereich der Anschlussstelle zwischen dem Umlenkkopf 7 und der wendel- und/oder spiralartigen Leitung 4 ein zweiter Knick 11 vorgesehen. Die beiden Knicke 10, 11 begünstigen die Separierung des Feststoffstromes und des Gasstromes, die am Ende der wendel- und/oder spiralartigen Leitung 4 über die Feststoffleitung 8 bzw. die Gasleitung 9 abgeführt werden.

Im dargestellten Ausführungsbeispiel ist eine mit dem Ende der wendel- und/oder spiralartigen Leitung 4 in Verbindung stehende Abscheidekammer 12 vorgesehen, an welche die Feststoffleitung 8 zum Ableiten des Feststoffstromes 5 und die Gasleitung 9 zum Ableiten des Gasstromes 6 angeschlossen sind. Die Abscheidekammer 12 ist im Mündungsbereich der wendel- und/oder spiralartigen Leitung 4 zylindrisch ausgebildet und geht oben in die Gasleitung 9 über. Unterhalb schließt sich ein trichterförmig verjüngender Teil 12a an, an den die Feststoffleitung angeschlossen ist. Die wendel- und/oder spiralartige Leitung 4 mündet vorzugsweise tangential unter einem Winkel β gegenüber der Horizontalen von mindcstcns 30° in die Abscheidekammer 12.

Im Rahmen der Erfindung sind aber auch andere Ausgestaltungen der Abscheidekammer 12 denkbar.

In der Beschreibung der weiteren Ausführungsbeispiele werden für gleiche Bauteile dieselben Bczugszeichcn verwendet.

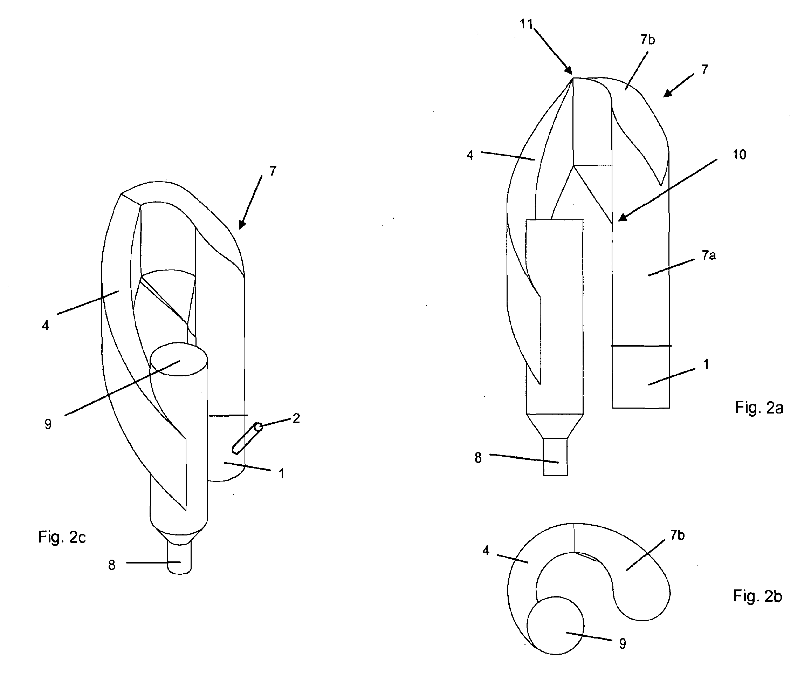

Das Ausführungsbeispiel gemäß den Figuren 2a bis 2c entspricht im Wesentlichen dem zuvor beschriebenen Ausführungsbeispiel und unterscheidet sich nur dadurch, dass der zweite Teil 2b des Umlenkkopfes 7 in der Draufsicht nicht gerade, sondern gekrümmt ausgebildet ist. Die Krümmung des zweiten Teils 7b setzt sich dann in der wendel- und/oder spiralartigen Leitung 4 fort. Die Zentrifugalkräfte wirken somit bereits in diesem Bereich des Umlenkkopfes auf die Gas-Feststoff-Suspension. Ansonsten sind in übereinstimmender Weise auch bei diesem Ausführungsbeispiel ein erster Knick 10 zwischen den beiden Teilen 7a, 7b des Umlenkkopfes und ein zweiter Knick 11 im Bereich der Anschlußstelle zwischen dem Umlenkkopf 7 und der wendel- und/oder spiralartigen Leitung 4 vorgesehen.

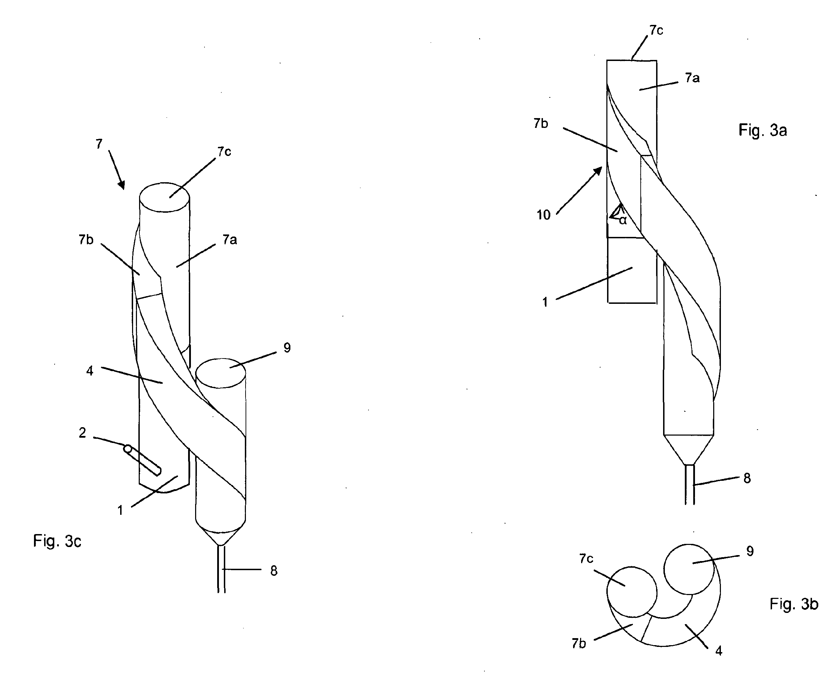

Beim dritten Ausführungsbeispiel gemäß den Figuren 3a bis 3c ist der zweite Teil 7b des Umlenkkopfes 7 nicht mehr schräg nach oben am Ende des ersten Teils 7a, sondern in Strömungsrichtung schräg nach unten und seitlich angesetzt.

Der erste Teil 7a des Umlenkkopfes 7 weist wiederum eine zylindrische Umfangswand auf, an die der zweite Teil 7b tangential unter einem Winkel α ≤ 90° angeschlossen ist. Diese Anschlussstelle stellt dann auch den Knick 10 in der Leitungsführung dar. Der erste Teil 7a des Umlenkkopfes 7 erstreckt sich noch oberhalb der Anschlussstelle 7b ein Stück weiter und ist dann mit einer quer zur Strömungsrichtung verlaufenden Stirnwand 7c abgeschlossen.

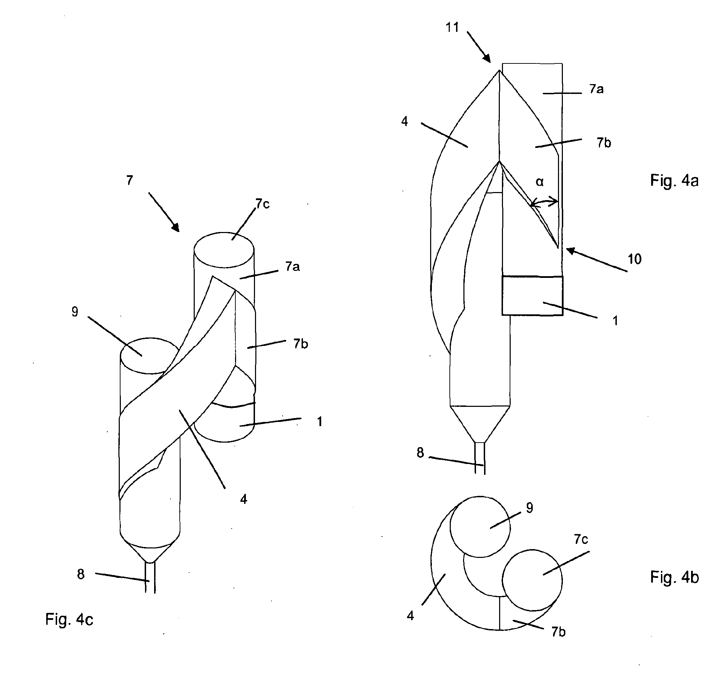

Das vierte Ausführungsbeispiel gemäß den Figuren 4a bis 4c unterscheidet sich vom dritten Ausführungsbeispiel dadurch, dass der zweite Teil 7b des Umlenkkopfs 7 nicht nach unten, sondern nach oben gerichtet ist.

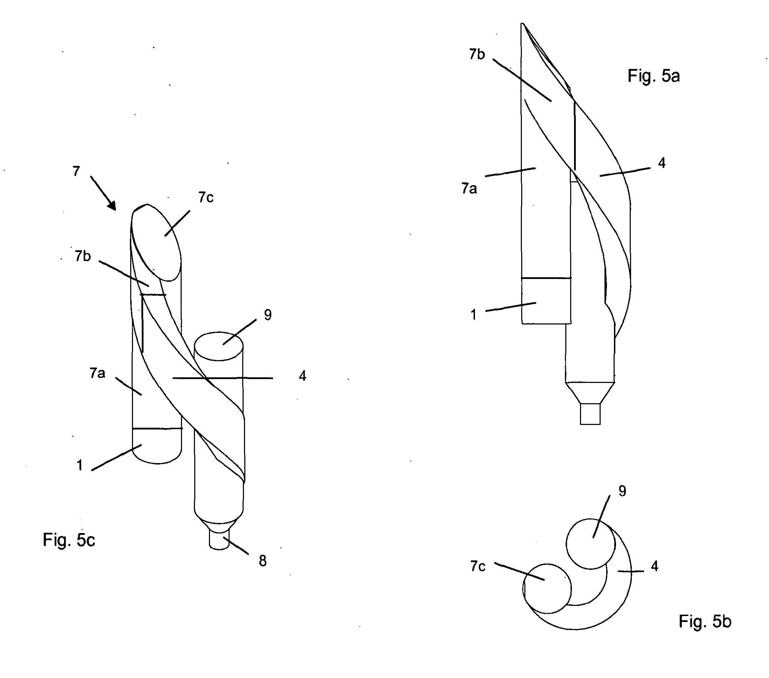

Das fünfte Ausführungsbeispiel gemäß den Figuren 5a bis 5c entspricht wiederum im Wesentlichen dem dritten Ausführungsbeispiel. Der Unterschied besteht darin, dass der erste Teil 7a nicht über die Anschlussstelle des zweiten Teils 7b verlängert ist, sondern mit diesem abschließt, so dass die obere Stirnseite 7c des ersten Teils 7a in etwa in einer Ebene mit der oberen Begrenzungswand des zweiten Teils 7b verläuft (siehe Fig. 5a).

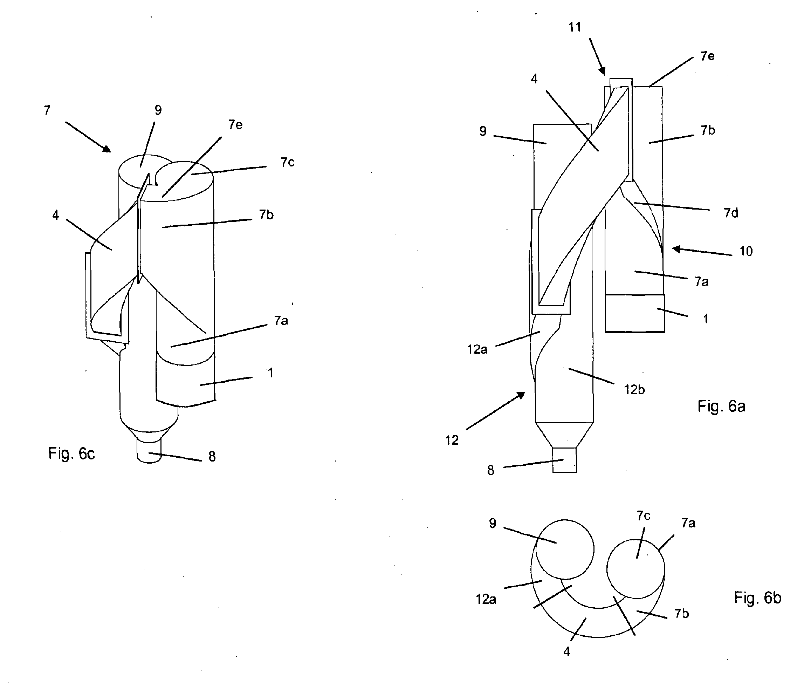

Im sechsten Ausführungsbeispiel gemäß den Figuren 6a bis 6c ist der erste Teil 7a des Umlenkkopfs 7 wieder als rohrförmiger Abschnitt mit kreisförmigen Querschnitt ausgebildet, an den der zweite Teil 7b tangential angeschlossen ist. Der zweite Teil 7b weist einen im Wesentlichen rechteckigen Querschnitt auf und ist in der Draufsicht gemäß Fig. 6b gekrümmt ausgebildet. Seine untere Begrenzungswand 7d ist ansteigend und seine obere Begrenzungswand 7d im Wesentlichen horizontal bzw. quer zur Mittelachse des ersten Teils 7a ausgerichtet. Durch die schräg nach oben verlaufende untere Begrenzungswand 7d ergibt sich für die Strömung wiederum ein Knick 10. Ein weiterer Knick 11 ist an der Anschlussstelle mit der wendel- und/oder spiralartigen Leitung 4 vorgesehen.

Die wendel- und/oder spiralartige Leitung 4 mündet in der Abscheidekammer 12, die im dargestellten Ausführungsbeispiel einen gekrümmten Abschnitt 12a aufweist, der sich an die wendel- und/oder spiralartige Leitung 4 anschließt, wobei dieser Abschnitt den gebogenen Verlauf der wendel- und/oder spiralartigen Leitung 4 aufnimmt und fortsetzt und schließlich in einen zylindrischen Teil 12b der Abscheidekammer mündet, an den unten die Feststoffleitung 8 und oben die Gasleitung 9 angeschlossen sind.

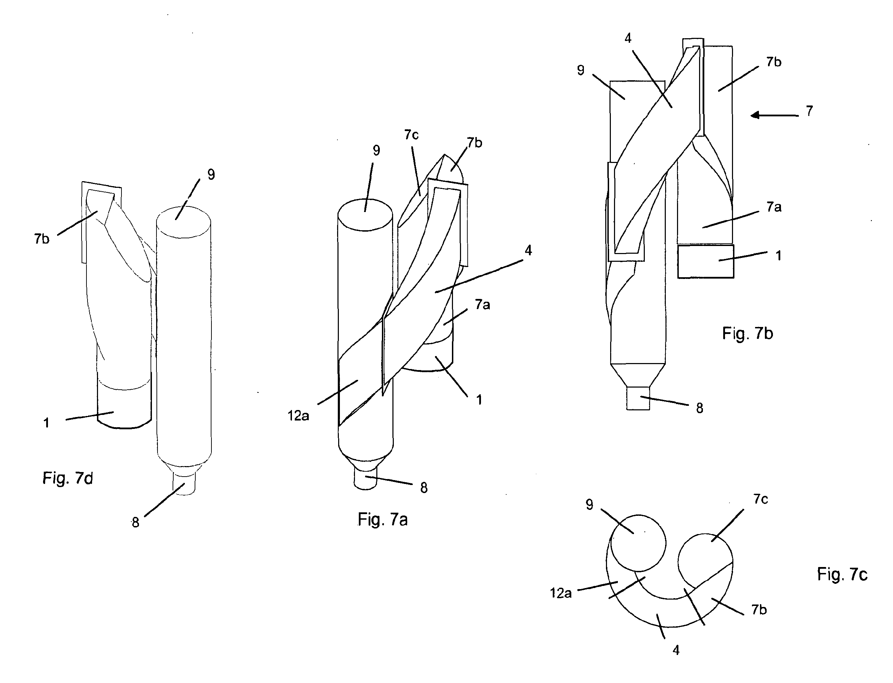

Eine Variante des siebten Ausführungsbeispieles ist in den Figuren 7a bis 7d dargestellt. Diese Variante unterscheidet sich aber lediglich dadurch, dass die Stirnseite 7c des rohrförmig ausgebildeten ersten Teils 7a nicht quer zur Strömungsrichtung (siehe Fig. 6a bis 6c), sondern schräg in Richtung des zweiten Teils 7b ausgerichtet ist. Diese schräg angesetzte Stirnseite 7c in Verbindung mit dem im untcrcn Bereich schräg nach oben verlaufenden zweiten Teil 7b bildet den ersten Knick in der Leitungsführung. Der zweite Knick wird wiederum im Bereich der Anschlussstelle mit der wendel- und/oder spiralartigen Leitung 4 gebildet.

Im Rahmen der Erfindung ist es denkbar, dass sich der Radius und/oder die Steigung und/oder die Querschnittsform und/oder die Querschnittsgröße der wendel- und/oder spiralartigen Leitung 4 im Strömungsrichtung der Gas-Feststoff-Suspension ändert. Auf diese Weise kann einerseits Einfluss auf die Vorseparierung der Gas-Feststoff-Suspension im Bereich der wendel- und/oder spiralartigen Leitung genommen werden und andererseits kann die wendel- und/oder spiralartige Leitung 4 an äußere Gegebenheiten angepasst werden. Dies ist insbesondere dann von Vorteil, wenn mehrere Stufen ineinander verschachtelt und übereinander angeordnet werden.

Der Radius, Steigung, Querschnittsform und/oder Querschnittsgröße können sich dabei in Strömungsrichtung sprunghaft und/oder zumindest in einem Abschnitt auch kontinuierlich ändern. So bewirkt beispielsweise eine Radiusverringerung einer Erhöhung der Zentrifugalkraft, während ein Radiuserhöhung einer Verringerung der Zentrifugalkraft entspricht. Durch Veränderung der Querschnittsform und -größe kann Einfluss auf die Strömungsgeschwindigkeit genommen werden.

Die oben beschriebenen Vorrichtungen werden vorzugsweise zur Durchführung chemischer und/oder physikalischer Reaktionen zwischen einem Feststoff und einem Gas, insbesondere zur Vorwärmung, Kühlung und/oder Calcinierung von feinkörnigen Materialien eingesetzt, wobei mehrere übereinander angeordnete Stufen vorgesehen werden können. Dabei geht die Gasleitung einer Stufe in die Steigleitung der nächst höheren Stufe über und die Feststoffleitung einer Stufe mündet in die Steigleitung der nächst niedrigeren Stufe.

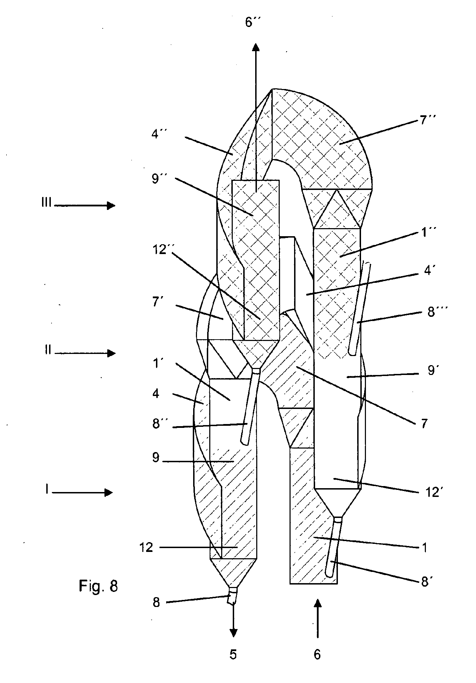

Im Folgenden wird anhand der Fig. 8 eine Vorrichtung mit drei Stufen I, II, III beschrieben, bei der es sich beispielsweise um einen dreistufigen Vorwärmer für Zementrohmaterial handelt. Die einzelnen Stufen sind dabei schematisch angedeutet. Sie können wahlwcisc gemäß einem oder mehreren der zuvor beschriebenen Ausführungsbeispiele ausgebildet werden. Es ist somit insbesondere denkbar, dass die einzelnen Stufen I, II, III unterschiedlich ausgestaltet sind.

Bei einer solchen mehrstufigen Anordnung wird ein zu behandelnder Feststoff in der obersten Stufe III über eine Feststoffleitung 8'" zugeführt und als behandelter Feststoff 5, beispielsweise vorgewärmter Feststoff, aus der untersten Stufe I abgeführt. Während der Feststoff somit von oben nach unten durch die drei Stufen geführt wird, durchströmt das Gas die Anordnung in umgekehrter Richtung. Bei dem der untersten Stufe zugeführten Gas 6 handelt es sich beispielsweise um das heiße Abgas eines Ofens oder eines Calcinators. Das in der dritten Stufe über die Gasleitung 9" abgeführte Gas 6" wird beispielsweise zur Entstaubung einem Filter oder einem nachgeschalteten hocheffizienten Abscheider zugeführt. Der behandelte Feststoff gelangt beispielsweise in einen Calcinator oder einen Ofen zur weiteren Bearbeitung. Durch die Ausbildung der Gas-Feststoff-Suspensionsleitung mit einer Steigleitung 1 und einer absteigenden wendel- und/oder spiralartigen Leitung 4 können die drei Stufen sehr kompakt und ineinander verschlungen angeordnet werden. Es kann weiterhin vorgesehen werden, dass die wendel- und/oder spiralartigen Leitungen 4, 4', 4" wenigstens zweier aufeinander folgenden Stufen abwechselnd links- und rechtsdrehend ausgebildet sind.

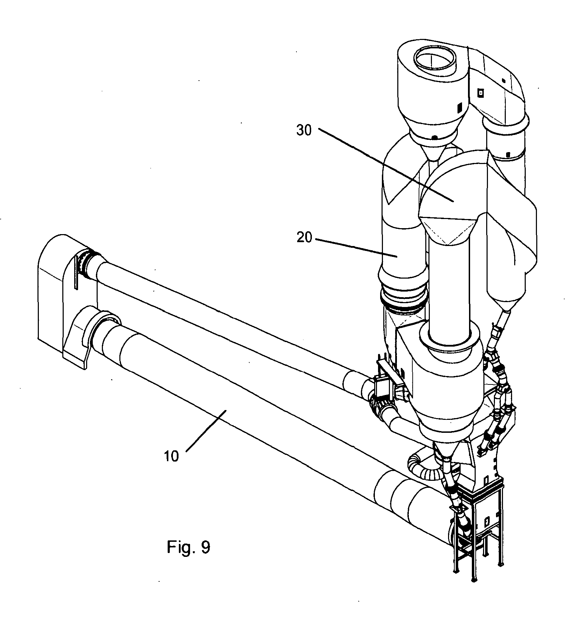

Fig. 9 zeigt schließlich eine dreidimensionale Darstellung einer Anlage zur Wärmebehandlung von feinkörnigem Gut bei der Zementherstellung mit einem Drehrohrofen 10, einem Calcinator 20 und einem Vorwärmer 30. Der Calcinator 20 und/oder der Vorwärmer 30 können dabei gemäß den in den Figuren 1 bis 8 beschriebenen Ausführungsbeispielen ausgebildet sein. Es ist auch denkbar, dass die einzelnen Merkmale der verschiedenen Ausführungsbeispiele miteinander kombiniert werden.

## Patentansprüche

1. Vorrichtung zur Separierung von einem Feststoff und einem Gas, mit
a. einer Steigleitung (1) zum Leiten einer Gas-Feststoff-Suspension mit einer Feststoffzuführöffnung (2) zum Zuführen eines Feststoffs und einer Gaszuführöffnung (3) zum Zuführen eines Gases,
b. einer absteigenden wendel- und/oder spiralartigen Leitung (4), in der durch Zentrifugalkräfte die Gas-Feststoff-Suspension in einen Feststoffstrom (5) und einen Gasstrom (6) getrennt wird,
c. einem Umlenkkopf (7), der die Steigleitung (1) mit der wendel- und/oder spiralartigen Leitung (4) verbindet,
d. einer mit dem Ende der wendel- und/oder spiralartigen Leitung (4) in Verbindung stehenden Feststoffleitung (8) zum Ableiten des Feststoffstroms sowie
e. einer mit dem Ende der wendel- und/oder spiralartigen Leitung (4) in Verbindung stehenden Gasleitung (9) zum Ableiten des Gasstroms,
**dadurch gekennzeichnet, dass** der Umlenkkopf (7) im Anschlussbereich an die Steigleitung (1) eine erste Querschnittsform und im Anschlussbereich an die wendel- und/oder spiralartige Leitung (4) eine unterschiedliche zweite Querschnittsform aufweist und im Bereich des Umlenkkopfs (7) wenigstens ein Knick (10, 11) in der Leitungsführung vorgesehen ist.

2. Vorrichtung nach Anspruch 1, **dadurch gekennzeichnet, dass** der Knick (10, 11) in der Leitungsführung in einer Seitenansicht einen Winkel α ≤ 160° aufweist.

3. Vorrichtung nach Anspruch 1, **dadurch gekennzeichnet, dass** der Knick (10, 11) derart ausgebildet ist, dass die Gas-Feststoff-Suspension in einem spitzen oder stumpfen Winkel umgelenkt wird.

4. Vorrichtung nach Anspruch 1, **dadurch gekennzeichnet, dass** der Umlenkkopf (7) einen ersten, an die Steigleitung (1) angeschlossenen Teil (7a) und einen zweiten, mit der wendel- und/oder spiralartigen Leitung (4) in Verbindung stehenden Teil (7b) aufweist, wobei der zweite Teil (7b) des Umlenkkopfs (7) derart an den ersten Teil (7a) des Umlenkkopfs angebunden ist, dass sich zwischen den beiden Teilen der Knick in der Leitungsführung ergibt.

5. Vorrichtung nach Anspruch 4, **dadurch gekennzeichnet, dass** der erste Teil (7a) des Umlenkkopfs (7) durch einen rohrförmigen Abschnitt mit kreisförmigem Querschnitt gebildet wird, der an seinem der Steigleitung (1) abgewandten Ende in den zweiten Teil des Umlenkkopfes (7) übergeht, wobei der zweite Teil (7b) ein Übergangsstück vom kreisförmigem Querschnitt des ersten Teils auf den Querschnitt der wendel- und/oder spiralartigen Leitung (4) bildet, und wobei die beiden Teile derart miteinander verbunden sind, dass die Gas-Feststoff-Suspension in einem spitzen und/oder stumpfen Winkel umgelenkt wird.

6. Vorrichtung nach Anspruch 4, **dadurch gekennzeichnet, dass** der erste Teil (7a) des Umlenkkopfs eine zylindrische Umfangswand aufweist und der zweite Teil (7b) des Umlenkkopfs (7) im Bereich der zylindrischen Umfangswand angeschlossen ist.

7. Vorrichtung nach Anspruch 6, **dadurch gekennzeichnet, dass** der erste Teil des Umlenkkopfs in Strömungsrichtung durch eine quer oder schräg zur Strömungsrichtung verlaufende Stirnwand abgeschlossen ist.

8. Vorrichtung nach Anspruch 1, **dadurch gekennzeichnet, dass** die wendel- und/oder spiralartige Leitung derart an den Umlenkkopf angeschlossen ist, das der wenigstens eine oder ein weiterer Knick (11) an der Anschlussstelle zwischen dem Umlenkkopf (7) und der wendel- und/oder spiralartigen Leitung (4) vorgesehen ist.

9. Vorrichtung nach Anspruch 1, **dadurch gekennzeichnet, dass** eine mit dem Ende der wendel- und/oder spiralartigen Leitung (4) in Verbindung stehende Abscheidekammer (12) vorgesehen ist, an welche die Feststoffleitung (8) zum Ableiten des Feststoffstroms (5) und die Gasleitung (9) zum Ableiten des Gasstroms (6) angeschlossen sind.

10. Vorrichtung nach einem oder mehreren der vorherigen Ansprüche, **dadurch gekennzeichnet, dass** mehrere, übereinander angeordnete Stufen vorhanden sind, die jeweils eine Steigleitung (1, 1', 1") , eine sich daran anschließende wendel- und/oder spiralartige Leitung sowie eine mit dem Ende der wendel- und/oder spiralartigen Leitung (4, 4', 4") in Verbindung stehende Feststoffleitung (8, 8', 8") und eine Gasleitung (9, 9', 9") aufweisen, wobei die Gasleitung einer Stufe in die Steigleitung der nächst höheren Stufe übergeht und die Feststoffleitung einer Stufe in der Steigleitung der nächst niedrigeren Stufe mündet.

11. Anlage zur Zementherstellung mit einem Vorwärmer (30), einem Calcinator (20) und einem Ofen (10), wobei der Vorwärmer (30) und/oder der Calcinator (20) wenigstens eine Vorrichtung nach einem oder mehreren der vorhergehenden Ansprüche 1 bis 11 aufweist.

## Claims

1. A device for separating a solid material and a gas, having
a. an ascending conduit (1) for conducting a gas-solid material suspension having a solid material supply port (2) for feeding in a solid material and a gas supply port (3) for feeding in a gas,
b. a descending helical and/or spiral conduit (4), in which the gas-solid material suspension is separated into a solid material flow (5) and a gas flow (6) by centrifugal forces,
c. a diverter head (7) that connects the ascending conduit (1) with the helical and/or spiral conduit (4),
d. connected to the end of the helical and/or spiral conduit (4) a solid material conduit (8) for discharging the flow of solid material and also
e. connected to the end of the helical and/or spiral conduit (4) a gas conduit (9)
for discharging the flow of gas,
**characterised in that** in the junction region to the ascending conduit (1) the diverter head (7) has a first cross-sectional shape and in the junction region to the helical and/or spiral conduit (4) has a second cross-sectional shape and **in that** in the region of the diverter head (7) at least one bend (10, 11) is provided in the conduit configuration.

2. A device according to claim 1, **characterised in that** the bend (10, 11) in the conduit configuration has an angle α ≤ 160° in side view.

3. A device according to claim 1, **characterised in that** the bend (10, 11) is designed in such a way that the gas-solid material suspension is diverted at an acute or obtuse angle.

4. A device according to claim 1, **characterised in that** the diverter head (7) comprises a first part (7a) connected to the ascending conduit (1) and a second part (7b) connected to the helical and/or spiral conduit (4), the second part (7b) of the diverter head (7) being connected to the first part (7a) of the diverter head in such a way that the bend in the conduit configuration is produced between the two parts.

5. A device according to claim 4, **characterised in that** the first part (7a) of the diverter head (7) is formed by a tubular portion of circular cross-section, which at its end remote from the ascending conduit (1) merges into the second part of the diverter head (7), the second part (7b) forming a transition piece from the circular cross-section of the first part to the cross-section of the helical and/or spiral conduit (4), and the two parts being connected with one another in such a way that the gas-solid material suspension is diverted at an acute and/or obtuse angle.

6. A device according to claim 4, **characterised in that** the first part (7a) of the diverter head has a cylindrical peripheral wall and the second part (7b) of the diverter head (7) is attached in the region of the cylindrical peripheral wall.

7. A device according to claim 6, **characterised in that** the first part of the diverter head is closed off in the direction of flow by an end wall running transversely or obliquely to the direction of flow.

8. A device according to claim 1, **characterised in that** the helical and/or spiral conduit is connected to the diverter head in such a way that the at least one or a further bend (11) is provided at the junction between the diverter head (7) and the helical and/or spiral conduit (4).

9. A device according to claim 1, **characterised in that** a separation chamber (12) connected to the end of the helical and/or spiral conduit (4) is provided, to which the solid material conduit (8) for discharging the solid material flow (5) and the gas conduit (9) for discharging the gas flow (6) are connected.

10. A device according to any one or more of the preceding claims 1, **characterised in that** a plurality of stages stacked one above the other are present, each comprising an ascending conduit (1, 1', 1"), a helical and/or spiral conduit adjoining it, as well as a solid material conduit (8, 8', 8") connecting to the end of the helical and/or spiral conduit (4, 4', 4"), and a gas conduit (9, 9', 9"), the gas conduit of one stage merging into the ascending conduit of the next higher stage and the solid material conduit of a stage opening out into the ascending conduit of the next lower stage.

11. A plant for cement manufacture, having a preheater (30), a calciner (20) and a kiln (10), the preheater (30) and/or the calciner (20) having a device according to one or more of the preceding claims 1 to 11

## Revendications

1. Dispositif de séparation d'une matière solide et d'un gaz, qui comprend
a. une conduite ascendante (1) pour une suspension de gaz et de matière solide, avec une ouverture d'alimentation en matière solide (2) pour l'amenée d'une matière solide, et avec une ouverture d'alimentation en gaz (3) pour l'amenée d'un gaz,
b. une conduite descendante en forme de colimaçon ou en forme de spirale (4), dans laquelle, sous l'effet de forces centrifuges, la suspension de gaz et de matière solide est séparée en un flux de matière solide (5) et un flux de gaz (6),
c. une tête de renvoi (7), qui relie la conduite ascendante (1) et la conduite descendante en forme de colimaçon ou en forme de spirale (4),
d. une conduite de matière solide (8), raccordée à l'extrémité de la conduite descendante en forme de colimaçon ou en forme de spirale (4), pour la déviation du flux de matière solide, et
e. une conduite de gaz (9), raccordée à l'extrémité de la conduite descendante en forme de colimaçon ou en forme de spirale (4) pour la déviation du flux de gaz, **caractérisé en ce que** la tête de renvoi (7) est dotée, dans la région de raccordement à la conduite ascendante (1), d'une première forme de section transversale et, dans la région de raccordement à la conduite descendante en forme de colimaçon ou en forme de spirale (4), d'une deuxième forme de section transversale différente, et que, dans la région de la tête de renvoi (7), au moins un coude (10, 11) est prévu dans le tracé de la conduite.

2. Dispositif selon la revendication 1, **caractérisé en ce que** le coude (10, 11), prévu dans le tracé de la conduite, forme, en vue latérale, un angle α ≤ 160 °

3. Dispositif selon la revendication 1, **caractérisé en ce que** le coude (10, 11) est formé de sorte que le flux de suspension de gaz et de matière solide soit dévié à angle aigu ou à angle obtus.

4. Dispositif selon la revendication 1, **caractérisé en ce que** la tête de renvoi (7) est dotée d'une première pièce (7a), qui est raccordée à la conduite ascendante (1), et d'une deuxième pièce (7b), qui est raccordée à la conduite descendante en forme de colimaçon ou en forme de spirale (4), sachant que la deuxième pièce (7b) de la tête de renvoi (7) est reliée à la première pièce (7a) de la tête de renvoi (7) de sorte que le coude soit formé entre les deux pièces, dans la tracé de la conduite.

5. Dispositif selon la revendication 4, **caractérisé en ce que** la première pièce (7a) de la tête de renvoi (7) est formée par une zone tubulaire à section transversale en forme de cercle, qui, à son extrémité opposée à la conduite ascendante (1), se confond avec la deuxième pièce de la tête de renvoi (7), sachant que la deuxième pièce (7b) forme une pièce de transition entre la section transversale en forme de cercle de la première pièce et la section transversale de la conduite descendante en forme de colimaçon ou en forme de spirale (4), et sachant que les deux pièces sont reliées ensemble de sorte que la suspension de gaz et de matière solide soit déviée sous un angle aigu et / ou un angle obtus.

6. Dispositif selon la revendication 4, **caractérisé en ce que** la première pièce (7a) de la tête de renvoi est dotée d'une paroi périphérique cylindrique et que la deuxième pièce (7b) de la tête de renvoi (7) est raccordée dans la région de ladite paroi périphérique.

7. Dispositif selon la revendication 6, **caractérisé en ce que** la première pièce de la tête de renvoi est fermée, dans la direction d'écoulement du flux, par une paroi frontale, qui s'étend transversalement ou obliquement par rapport à la direction d'écoulement du flux.

8. Dispositif selon la revendication 1, **caractérisé en ce que** la conduite descendante en forme de colimaçon ou en forme de spirale est raccordée à la tête de renvoi de sorte que le coude au moins prévu ou un autre coude (11) soit situé au point de raccordement entre la tête de renvoi (7) et la conduite descendante en forme de colimaçon ou en forme de spirale (4).

9. Dispositif selon la revendication 1, **caractérisé en ce qu'**est prévue une chambre de séparation (12), qui est reliée à l'extrémité de la conduite descendante en forme de colimaçon ou en forme de spirale (4) et à laquelle sont raccordées la conduite de matière solide (8), pour la déviation du flux de matière solide (5), et la conduite de gaz (9), pour la déviation du flux de gaz (6).

10. dispositif selon l'une ou plusieurs des revendications précédentes, **caractérisé en ce que** sont prévus plusieurs étages, disposés les uns au-dessus des autres, qui sont dotés, chacun, d'une conduite ascendante (1, 1', 1"), d'une conduite descendante en forme de colimaçon ou en forme de spirale, ainsi que d'une conduite de matière solide (8, 8', 8"), reliée à la conduite descendante en forme de colimaçon ou en forme de spirale (4, 4', 4"), et d'une conduite de gaz (9, 9', 9"), sachant que la conduite de gaz d'un étage se confond avec la conduite ascendante de l'étage supérieur, suivant, et que la conduite de matière solide d'un étage débouche dans la conduite ascendante de l'étage inférieur, suivant.

11. Installation de fabrication de ciment doté d'un dispositif de préchauffage (30), d'un calcinateur (20) et d'un four (10), sachant que le dispositif de préchauffage (30) et / ou le calcinateur (20) est / sont doté(s) d'au moins un dispositif selon l'une ou plusieurs des revendications précédentes 1 à 10.
